# EUROPÄISCHE PATENTSCHRIFT

(11) **EP 0 713 280 B1**
(45) Veröffentlichungstag und Bekanntmachung des Hinweises auf die Patenterteilung: **02.05.2003**
(21) Anmeldenummer: 95117482.0
(22) Anmeldetag: 07.11.1995
(51) Int. Cl.: H02H 7/085

(54) **Elektronisch kommutierter Motor**
Electronically commutated motor
Moteur de commutation électronique

(30) Priorität: 15.11.1994 DE 9418121 U; 28.08.1995 DE 29513783 U
(43) Veröffentlichungstag der Anmeldung: 22.05.1996
(73) Patentinhaber: PAPST-MOTOREN GmbH & Co. KG, 78106 St Georgen (DE)
(72) Erfinder: Jeske, Frank, Dipl.-Ing., D-78112 St. Georgen (DE)

(56) Entgegenhaltungen:
- EP-A- 0 324 614
- DE-A- 3 342 986

## Beschreibung

Die Erfindung betrifft einen elektronisch kommutierten Motor mit mindestens zwei Strängen.

Derartige Motoren werden in großen Stückzahlen für verschiedene Zwecke verwendet, z.B. für den Antrieb von Lüftern, oder den Antrieb von medizinischen Geräten, oder den Antrieb des Spiegels in Laserdruckern.

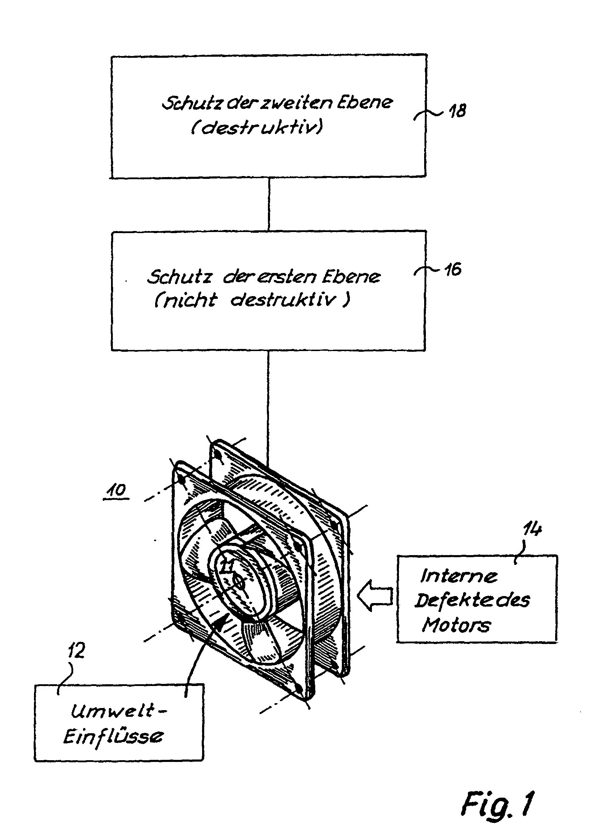

Fig. 1 zeigt das Beispiel eines Lüfters 10, in dessen Nabe ein Antriebsmotor 11 angeordnet ist. Auf einen solchen Lüfter können Umwelteinflüsse 12 einwirken, z.B., daß eine Maus in den Lüfter läuft und dessen Drehung blockiert, oder daß der Lüfter an eine falsche Spannung angeschlossen wird, oder daß er mit der falschen Polarität an die richtige Spannung angeschlossen wird, oder daß der Lüfter zu heiß wird, oder daß er durch chemische Substanzen beschädigt wird.

Ebenso können interne Defekte 14 des Motors auftreten, z.B. Lagerschäden, oder Kurzschlüsse zwischen Bauteilen, oder Kurzschlüsse in einem Kondensator.

Weder solche Umwelteinflüsse 12, noch interne Defekte 14, dürfen dazu führen, daß der Motor durch einen zu hohen Strom überhitzt wird und zu brennen anfängt oder einen Brand verursacht.

Gemäß Fig. 1 gibt es für solche Motoren Schutzvorrichtungen, die summarisch unterschieden werden können in einen Schutz 16 der ersten Ebene, der nicht destruktiv ist, und einen Schutz 18 der zweiten Ebene, der bei der vorliegenden Erfindung destruktiv ist, d.h. wenn der Schutz der ersten Ebene 16 nicht funktioniert, bewirkt der Schutz der zweiten Ebene 18 innerhalb kurzer Zeit die Zerstörung eines Bauteils, wodurch der Motor dann stromlos wird.

Als Schutz der ersten Ebene eignen sich z.B. die Schaltungen nach der DE 24 19 432 C3 (Kondensatorkopplung), oder bestimmte ICs, die bei Überstrom den Motorstrom unterbrechen und nach einer längeren Pause immer wieder kurz einschalten. Nachfolgend wird ein solches IC der Firma ROHM hinsichtlich seiner Funktion beschrieben.

Für den Fall, daß der Schutz der ersten Ebene 16 defekt wird, verwendet man als Schutz der zweiten Ebene 18 gewöhnlich einen PTC-Widerstand in einer der Zuleitungen des Motors. Fließt durch den Motor ein zu hoher Strom, weil die Drehung seines Rotors blockiert ist, so wird der PTC-Widerstand heiß, sein Widerstandswert nimmt zu, und dieser hohe Widerstandswert begrenzt den Strom im Motor auf ungefährliche Werte.

In der DE 33 42 986 A ist eine Schaltung angegeben, die vor allem den Kommutierungsvorgang für elektronisch kommutierte Motoren beschreibt und die u.a. auch einen PTC-Widerstand in einer Zuleitung des Motorstroms enthält, der bei Blockierung des Rotors den Motor stromlos macht.

Nachteilig bei der Verwendung solcher PTC-Widerstände ist folgendes:
- Damit der PTC-Widerstand nicht unbeabsichtigt anspricht und den Motor abschaltet, müssen die zulässige Überspannung und die zulässige maximale Umgebungstemperatur eingeschränkt werden, d.h. das volle Potential des Motors kann evtl. nicht ausgenutzt werden.
- Bei höheren Betriebsströmen oder Betriebsspannungen sind die passenden PTC-Widerstände körperlich sehr groß und deshalb im Layout einer Leiterplatte schwierig oder gar nicht unterzubringen. Dies bereitet besondere Schwierigkeiten bei sogenannten Gerätelüftern. (Fig. 1 zeigt einen solchen Gerätelüfter).
- Je nach Umgebungstemperatur kann es ziemlich lange dauern, bis ein PTC-Widerstand anspricht und den Strom begrenzt, z.B. im Winter bei niedrigen Temperaturen. Deshalb muß man in einem solchen Fall die Stromversorgung dafür auslegen, daß u.U. während 30 Minuten ein wesentlich erhöhter Strom zum - defekten - Motor fließen kann, bis der PTC-Widerstand anspricht, d.h. die Stromversorgung muß erheblich überdimensioniert werden.

Schließlich ist in der EP-A 0 324 614 ein sehr aufwendiges und kompliziertes Überwachungssystem beschrieben, bei dem Ansteuerimpulse für den Motor überwacht werden und nicht der Motor selbst. Bleiben die Ansteuerimpulse aus, wird der Motor kurzgeschlossen, wodurch eine Schaltung aktiviert wird, die zu einer Unterbrechung der Stromzufuhr des Netzteils zum Motor führt.

Es ist deshalb eine Aufgabe der Erfindung, einen neuen elektronisch kommutierten Motor bereitzustellen.

Diese Aufgabe wird nach der Erfindung gelöst durch einen elektronisch kommutierten Motor mit mindestens zwei Strängen, welche über zugeordnete Halbleiterschalter bestrombar sind, mit einem in der Stromzufuhr zum Motor angeordneten Sicherungswiderstand, welcher bei thermischer Überlastung eine Unterbrechung der Stromzufuhr zum Motor bewirkt, und mit einer Schaltvorrichtung, welche bei einem während einer vorgegebenen Zeitspanne andauernden hohen Strom durch diesen Sicherungswiderstand eine gleichzeitige, ständige Einschaltung des Stroms durch mehr als einen Strang des Motors und dadurch ein rasches Ansprechen des Sicherungswiderstandes bewirkt. Im Normalfall wird bei einem elektronisch kommutierten Motor zu einem bestimmten Zeitpunkt immer nur ein Strang eingeschaltet ("bestromt"). Allenfalls werden im Augenblick der Kommutierung des Stromes von einem Strang zum nächsten Strang kurzzeitig beide Stränge eingeschaltet. Bei der Erfindung werden aber mindestens zwei Stränge gleichzeitig auf Dauer eingeschaltet, wenn ein Defekt im Motor vorliegt, und diese gleichzeitige Einschaltung bewirkt einen hohen Strom zum Motor, der den Sicherungswiderstand innerhalb sehr kurzer Zeit zum Durchschmelzen bringt, wodurch der Motor sehr schnell vollständig stromlos wird und die Gefahr einer unzulässigen Erwärmung sicher vermieden wird. Auch wird es so möglich, die maximal zulässige Umgebungstemperatur des Motors und die maximal zulässige Betriebsspannung so festzulegen, wie sie den Charakteristiken des Motors entsprechen, also entsprechend der Isolationsklasse der Wicklungen, und entsprechend der maximal zulässigen Temperatur der verwendeten Bauelemente.

Dabei geht man mit Vorteil gemäß Anspruch 2 vor. Im Betrieb wird der Kondensator durch den Spannungsabfall aufgeladen, und er wird über den Entladekreis immer wieder dann entladen, wenn der Betriebsstrom, z.B. durch einen pulsierenden Verlauf, auf niedrige Werte sinkt. Somit kann sich der Kondensator im normalen Betrieb niemals auf einen hohen Wert aufladen, sondern erst dann, wenn durch einen Defekt ständig ein hoher Betriebsstrom zum Motor fließt.

Eine besonders vorteilhafte Ausgestaltung der Erfindung ergibt sich bei einem Motor, bei welchem eine Blockiersicherungsschaltung vorgesehen ist, welche bei blockiertem Rotor den Motor zeitweilig oder ständig stromlos macht, und bei welchem die Schaltvorrichtung so ausgelegt ist, daß sie nicht anspricht, solange diese Blockiersicherungsschaltung normal arbeitet. Die Blockiersicherungsschaltung übernimmt so als Schutz der ersten Ebene den Schutz des Motors bei Blockieren des Rotors, wobei der Motor voll funktionsfähig bleibt, aber vor Überhitzung geschützt ist. Erst wenn die Blockiersicherungsschaltung defekt wird, spricht nach Ablauf einer vorgegebenen Zeit die Schaltvorrichtung an und bewirkt das Durchschmelzen des Sicherungswiderstandes, wobei die Schaltvorrichtung den Schutz der zweiten Ebene darstellt, der zur Zerstörung eines hierfür vorgesehenen Bauelements im Motor führt, um den Motor stromlos zu machen.

Mit besonderem Vorteil ist der Motor ein zweisträngiger, zweipulsiger Motor, da ein solcher einen stark pulsierenden Verlauf des Betriebsstroms hat, so daß der Entladekreis des Kondensators bei jeder Umdrehung des Rotors mindestens zweimal wirksam wird.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den übrigen Unteransprüchen. Es zeigt:
- Fig. 1: eine schematische Darstellung zur Erläuterung des Grundprinzips der vorliegenden Erfindung,
- Fig. 2: ein Schaltbild einer ersten Ausführungsform der Erfindung,
- Fig. 3: ein Schaubild zur Erläuterung des bei Fig. 2 verwendeten IC,
- Fig. 4: eine Übersichtsdarstellung, welche nacheinander den Stromverlauf im Motor der Fig. 2 beim Hochlauf, im normalen Betrieb, bei blockiertem Rotor aber funktionierendem IC 44, sowie bei blockiertem Rotor und defektem IC 44, zeigt,
- Fig. 5: ein Prinzipschaltbild einer zweiten Ausführungsform der Erfindung,
- Fig. 6: eine Darstellung analog Fig. 4, welche verschiedene Momente im Leben eines zuerst gesunden und dann immer defekter werdenden Motors bis zum exitus zeigt,
- Fig. 7: ein Prinzipschaltbild einer dritten Ausführungsform der Erfindung, welche eine Variante zu Fig. 2 darstellt, und
- Fig. 8: ein Prinzipschaltbild einer vierten Ausführungsform der Erfindung, welche eine Variante zu Fig. 5 darstellt.

Fig. 1 zeigt das Grundprinzip einer bevorzugten Ausführungsform der Erfindung. Der Motor 11 wird gegen Umwelteinflüsse durch eine erste Schutzebene 16 geschützt, die nicht destruktiv arbeitet, so daß der Motor 11 nach Wegfall einer äußeren Störung normal weiterläuft. Der Motor 11 wird ferner gegen interne Defekte durch einen Schutz der zweiten Ebene 18 geschützt, der destruktiv wirkt, um den Motor sicher stromlos zu machen.

Der Schutz 18 der zweiten Ebene bewirkt also eine zusätzliche Sicherheit für den Fall, daß der Schutz durch die erste Ebene 16 mangelhaft wird und folglich nicht ausreicht.

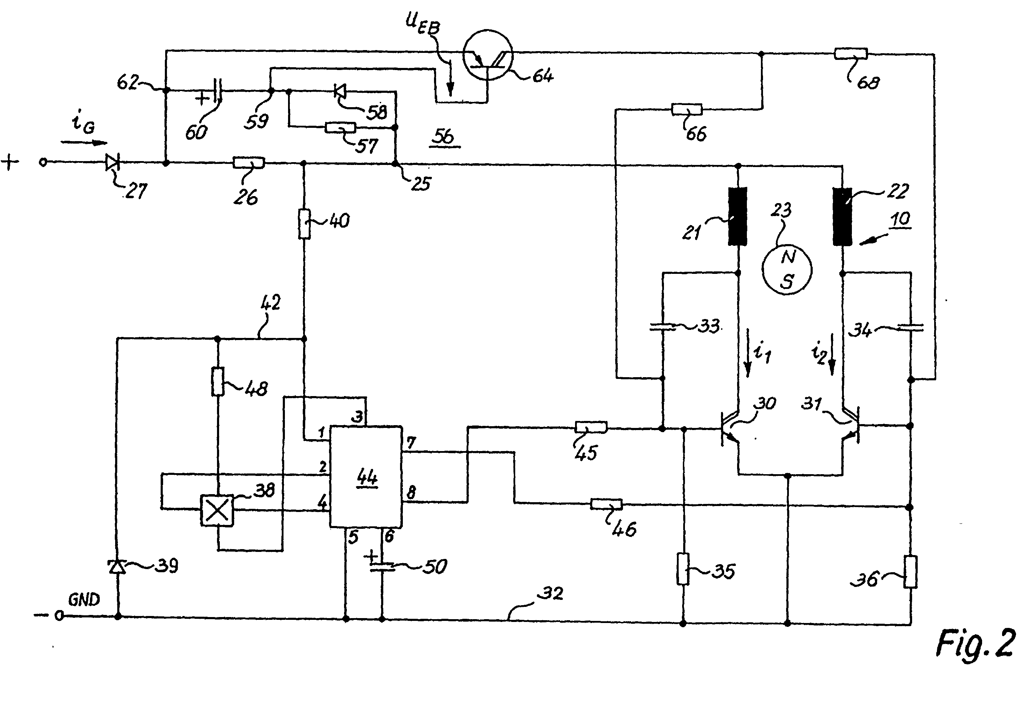

Fig. 2 zeigt eine praktische Ausführungsform der Erfindung, bei einem zweisträngigen, zweipulsigen elektronisch kommutierten Motor 10, der nur schematisch angedeutet ist. Dieser hat zwei Wicklungsstränge 21, 22, durch die im Betrieb alternierend pulsierende Ströme i₁, i₂ fließen, d.h. wenn im Strang 21 ein Strom i₁ fließt, ist der Strang 22 stromlos, und umgekehrt. Die Ströme i₁, i₂ sind gewöhnlich durch stromlose Intervalle, oder durch Intervalle mit niedrigen Strömen, voneinander getrennt. Ein permanentmagnetischer Rotor 23 ist schematisch angedeutet.

Zu den Begriffen zweisträngig und zweipulsig vergleiche den Aufsatz "zweipulsige kollektorlose Gleichstrommotoren" in asr-digest für angewandte Antriebstechnik, Heft 1 bis 2, 1977, Seiten 27 bis 31. Die Erfindung eignet sich in gleicher Weise für Motoren mit mehr als zwei Strängen.

Die oberen Anschlüsse der Stränge 21, 22 sind über einen Knotenpunkt 25, einen Sicherungswiderstand 26 und eine Diode 27 an einen positiven Anschluß angeschlossen, z.B. an plus 48 V. Die Diode 27 dient als Schutz dagegen, daß der Motor 10 mit falscher Polung an ein Gleichstromnetz angeschlossen wird.

Die unteren Anschlüsse der Stränge 21, 22 sind jeweils an den Kollektor eines zugeordneten npn-Leistungstransistors 30 bzw. 31 angeschlossen. Die Emitter der Transistoren 30, 31 sind an einen Minusleiter 32 angeschlossen. Zwischen Kollektor und Basis der Transistoren 30, 31 liegt jeweils ein Kondensator 33 bzw. 34, der dazu dient, Funkstörungen zu reduzieren, und zwischen der Basis und der Minusleitung 32 liegt jeweils ein Widerstand 35 bzw. 36.

Zum Ansteuern der Transistoren 30 und 31 dient ein Hallgenerator 38, der im Magnetfeld des Rotors 23 angeordnet ist und als Rotorstellungssensor dient. Zu seiner Stromversorgung dient die Spannung an einer Zenerdiode 39, die in Reihe mit einem Widerstand 40 zwischen dem Knotenpunkt 25 und der Minusleitung 32 angeschlossen ist. An der Verbindung 42 von Widerstand 40 und Zenerdiode 39 liegt also eine stabilisierte Spannung von z.B. 24 V. An diese ist auch ein IC 44 angeschlossen, der eine Schaltung enthält, welche die Signale des Hallgenerators 38, die seinen Eingängen 2 und 4 zugeführt werden, aufbereitet und als Steuersignale an seinen Ausgängen 8, 7 über Widerstände 45 bzw. 46 den Basen der Steuertransistoren 30 bzw. 31 zuführt.

Der dargestellte IC 44 ist ein Produkt der Firma ROHM mit der Typenbezeichnung BA6404F. Der Strompfad des Hallgenerators 38 ist über einen Widerstand 48 an die Verbindung 42 angeschlossen, und direkt an den Ausgang 3 des IC 44. Der Anschluß 5 des IC 44 ist direkt mit der Minusleitung 32 verbunden, der Anschluß 6 über einen Kondensator 50.

Im normalen Betrieb schaltet der IC 44, gesteuert durch die Signal am Hallgenerator 38, alternierend die Transistoren 30 bzw. 31 ein. Wird der Rotor 23 blockiert, so ändern sich die Signale am Hallgenerator 38 nicht mehr, und der IC 44 unterbricht in diesem Fall den Strom i₁ oder i₂ durch den gerade Strom führenden Strang 21 oder 22, so daß der Motor 10 stromlos wird.

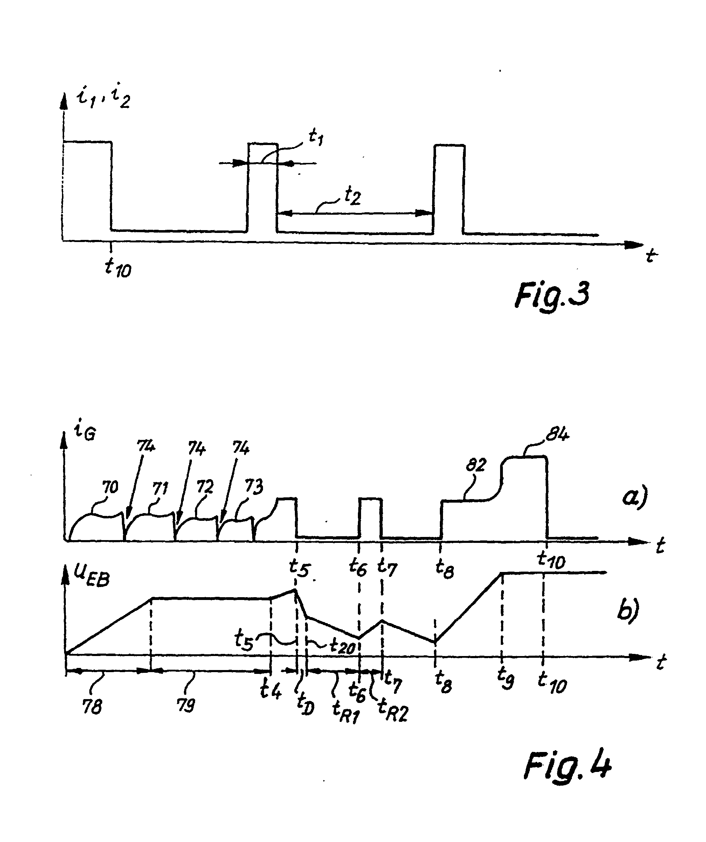

Dies ist in Fig. 3 schematisch dargestellt. Der gerade fließende Strom i₁ oder i₂ wird zum Zeitpunkt t₁₀ abgeschaltet, und zwar während einer Zeitdauer t₂ von z.B. 3 Sekunden. Nach diesen 3 Sekunden schaltet der IC 44 den betreffenden Strang 21 oder 22 (entsprechend dem augenblicklichen Signal des Hallgenerators 38) während einer Zeit t₁ (z.B. eine Sekunde) wieder ein. Läuft der Motor jetzt wieder an, z.B., weil die Blockierung des Rotors 23 behoben worden ist, so läuft der Motor normal weiter. Bewegt sich aber der Rotor 23 nicht, so wird der Strom abermals während der Zeitspanne t₂ abgeschaltet, und dieses wiederholt sich periodisch. Der Vorteil ist, daß der Motor automatisch wieder anläuft, wenn die Blockierung des Rotors behoben ist, ohne daß hierdurch eine Überhitzung des Motors auftreten kann.

Nun kann aber auch der IC 44 defekt werden, und für diesen Fall ist eine Schaltvorrichtung 56 vorgesehen, welche innerhalb kurzer Zeit (ca. 2 Sekunden) anspricht. Sie bewirkt ein starkes Ansteigen des Stroms durch den Sicherungswiderstand 26, was diesen nach etwa 10 weiteren Sekunden zum Durchschmelzen bringt und damit den Motor 10 stromlos macht. Insgesamt kann also der Motor 10 durch die Schaltvorrichtung 56 innerhalb einer Zeit von wesentlich weniger als einer Minute stromlos gemacht werden.

Vom Knotenpunkt 25 führt die Parallelschaltung eines Ladewiderstands 57 und einer - zur Entladung dienenden - Diode 58 zu einem Knotenpunkt 59 und über diesen zu einem Kondensator 60, der seinerseits über einen Knotenpunkt 62 mit der Kathode der Diode 27 verbunden ist.

An den Knotenpunkt 62 ist der Emitter und an den Knotenpunkt 59 die Basis eines pnp-Transistors 64 angeschlossen, d.h. die Spannung am Kondensator 60 entspricht der Emitter-Basis-Spannung U_{EB} des Transistors 64. Der Kollektor des Transistors 64 ist über einen Widerstand 66 mit der Basis des Transistors 30 und über einen Widerstand 68 mit der Basis des Transistors 31 verbunden. Wie man ohne weiteres erkennt, erhalten dann, wenn der Transistor 64 stromleitend wird, beide Transistoren 30 und 31 einen Basisstrom und werden dadurch voll leitend, so daß in beiden Strängen 21 und 22 ein Strom i₁ bzw. i₂ fließt.

Bei zweisträngigen Motoren haben die Stränge 21, 22 gleich große Windungszahlen, sind aber entgegengesetzt gewickelt, so daß sich in diesem Fall (gleichzeitiger Strom in beiden Wicklungen) ihre Magnetfelder gegenseitig aufheben, d.h. die Induktivitäten der beiden Wicklungen sind unwirksam, und die Stränge 21, 22 wirken nur wie ohmsche Widerstände, so daß in diesem Fall die Ströme i₁ und i₂ schlagartig sehr hoch werden und innerhalb einer kurzen Zeit von ca. 10 Sekunden den Sicherungswiderstand 26 zum Durchschmelzen bringen.

### Arbeitsweise der Schaltvorrichtung 56

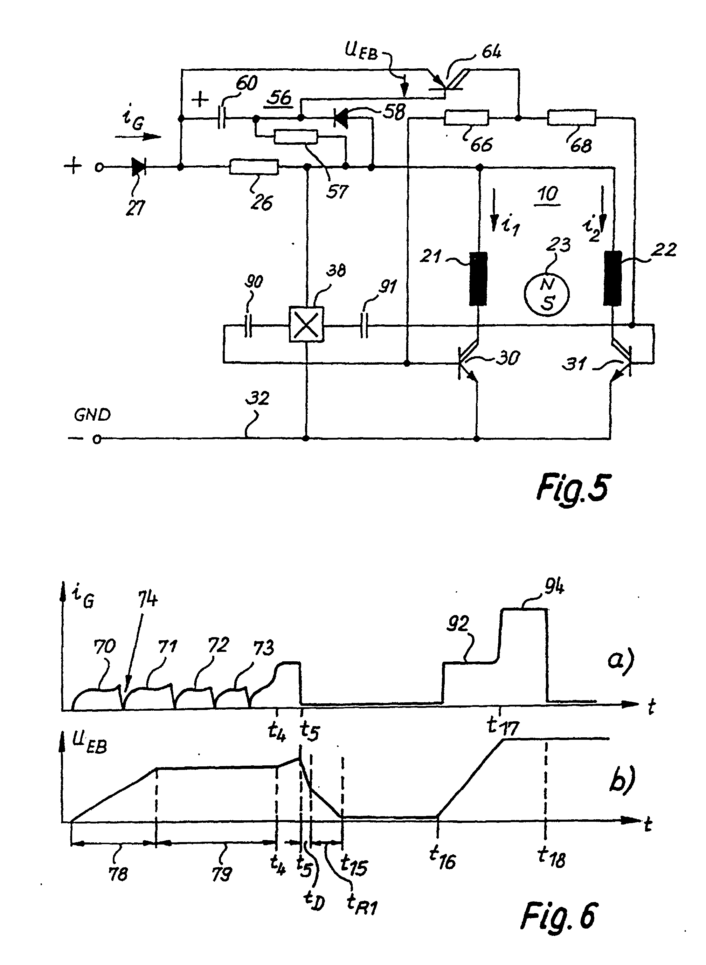

Wie Fig. 4a zeigt, fließen im normalen Betrieb durch die Stränge 21, 22 Stromimpulse. Mit 70 und 71 sind Stromimpulse bezeichnet, wie sie beim Anlauf auftreten; mit 72 und 73 sind (kleinere und kürzere) Stromimpulse bezeichnet, wie sie im Normalbetrieb des Motors auftreten, also nach dem Hochlauf. (In der Realität erhält man eine Zahl von mehreren hundert Stromimpulsen beim Hochlauf; Fig. 4 ist sehr stark schematisiert, da sonst eine zeichnerische Darstellung nicht möglich wäre.) Zwischen den Impulsen 70 bis 73 liegen jeweils Stromlücken 74.

Während eines Stromimpulses 70 bis 73 entsteht am Widerstand 26 ein Spannungsabfall, und dieser wird über den Ladewiderstand 57 dem Kondensator 60 zugeführt und lädt diesen auf. Dabei wird die Diode 58 gesperrt. Während der Stromlücken 74 wird der Spannungsabfall am Widerstand 26 zu Null. Nun kann sich der Kondensator 60 über den Widerstand 26 und die Diode 58 kurzzeitig entladen, so daß der Kondensator 60 ständig abwechselnd geladen und entladen wird. Dabei entsteht an ihm eine mittlere Spannung, wie sie in Fig. 4b dargestellt ist.

Während der Hochlaufphase 78 steigt diese Spannung an, und sie erreicht im Dauerbetrieb 79 einen konstanten Wert. Wird zum Zeitpunkt t₄ der Rotor 23 blockiert, so steigt gemäß Fig. 4a der Strom i_{G} im Widerstand 26 an, wodurch auch die Spannung am Kondensator 60 zunimmt. In diesem Fall unterbricht der IC 44 an der Stelle t₅ den Motorstrom für die Zeitspanne t₂ (Fig. 3), z.B. während 3 Sekunden, so daß der Kondensator 60 bis zum Zeitpunkt t₆ teilweise entladen wird.

Bis zu einem Zeitpunkt t₂₀, also während einer kurzen Zeitspanne t_{D}, geht diese Entladung sehr schnell vor sich, da während dieser Zeitspanne t_{D} die Diode 58 leitend ist und folglich nur der (kleine) Widerstand 26 im Entladekreis wirksam ist. Zum Zeitpunkt t₂₀ sperrt die Diode 58, da die Spannung an ihr zu niedrig wird, und ab da erfolgt bis zum Zeitpunkt t₆, also während einer Zeitspanne t_{R1}, eine langsamere Entladung über die beiden in Reihe geschalteten Widerstände 57 und 26.

Die schnelle Entladung über die Diode 58 ist besonders in der ersten Phase des Starts (Hochlaufs) vorteilhaft, um hier ein Ansprechen der Vorrichtung 56 sicher zu vermeiden, da beim Start - infolge der niedrigen Drehzahl - lange Stromimpulse 70, 71 mit hoher Amplitude fließen.

Zum Zeitpunkt t₆ schaltet der IC 44 den Strom i_{G} bis zum Zeitpunkt t₇ wieder ein, wodurch die Spannung am Kondensator 60 während der Zeitspanne t_{R2} wieder zunimmt und die Ladung des Kondensators 60 über den Ladewiderstand 57 erfolgt. Die Spannung am Kondensator 60 bleibt hierbei ständig unter der Einschaltspannung des Transistors 64.

Anschließend an t₇ wird der Strom i_{G} erneut unterbrochen, und der Kondensator 60 entlädt sich erneut in der bereits beschriebenen Weise.

Zum Zeitpunkt t₈ schaltet der IC 44 den Strom erneut ein, und es sei nun angenommen, daß der IC 44 defekt wird und den Strom nicht wieder abschalten kann, d.h. die erste Schutzebene 16 gemäß Fig. 1 versagt. Der hohe Strom 82 durch den Widerstand 26 bewirkt deshalb jetzt eine länger andauernde Aufladung des Kondensators 60, und zum Zeitpunkt t₉ wird deshalb der Transistor 64 leitend, wodurch beide Transistoren 30 und 31 leitend gesteuert werden und der Strom i_{G} eine hohe Amplitude 84 annimmt, die, z.B. innerhalb von 10 Sekunden, zum Zeitpunkt t₁₀ den Schutzwiderstand 26 zum Durchschmelzen bringt. Dies entspricht dem Schutz der zweiten Ebene 18 in Fig. 1.

Auf diese Weise ist also der Motor 10 auch dann geschützt, wenn z.B. der IC 44 defekt wird und der Schutz der ersten Ebene versagt.

| Bevorzugte Werte für die Bauteile der Fig. 2 | |
|---|---|
| Betriebsspannung 48 V | |
| Motor 10 mit Ausgangsleistung von ca. 5 W | |
| Stränge 21, 22 | je 170 Ohm, 83 mH |
| Widerstand 26 | 15 Ohm (NKS2 von Röderstein) |
| Transistoren 30, 31 | ZTX600 |
| Kondensatoren 33, 34 | 3,3 nF |
| Widerstände 35, 36 | 1 kOhm |
| IC 44 | BA6404F (ROHM) |
| Hallgenerator 38 | VHE112 |
| Zenerdiode 39 | 24 V |
| Widerstand 40 | 1,5 kOhm |
| Kondensator 50 | 0,47 µF |
| Widerstände 45, 46 | 10 kOhm |
| Widerstand 57 | 2 MOhm |
| Diode 58 | BAS16 |
| Kondensator 60 | 3,3 µF |
| Transistor 64 | BCV46 (Darlingtontransistor) |
| Widerstände 66, 68 | 22 kOhm |

Fig. 5 zeigt eine Variante, bei der der Schutz der ersten Ebene 16 (Fig. 1) anders ausgebildet ist als bei Fig. 2, während der Schutz der zweiten Ebene 18 mit Fig. 2 übereinstimmt. Gleiche oder gleichwirkende Teile wie in Fig. 2 werden deshalb mit denselben Bezugszeichen bezeichnet und gewöhnlich nicht nochmals beschrieben.

Die beiden Ausgänge des Hallgenerators 38, der hier zweckmäßig einen integrierten Vorverstärker enthält, sind über einen Kondensator 90 mit der Basis des Transistors 30 und über einen Kondensator 91 mit der Basis des Transistors 31 verbunden. Die in Fig. 6 dargestellten Abläufe bis zum Zeitpunkt t₄ sind identisch mit Fig. 4, so daß auf die dortigen Erläuterungen verwiesen werden kann. Auch hier gilt, daß die Darstellung sehr stark schematisiert ist, um das Verständnis der Erfindung zu erleichtern.

Zum Zeitpunkt t₄ wird der Rotor 23 blockiert, und dadurch lädt sich der Kondensator 90 oder 91 des im Augenblick der Blockierung leitenden Transistors 30 oder 31 auf, so daß der betreffende Transistor zum Zeitpunkt t₅ keinen Basisstrom mehr erhält und folglich nichtleitend wird. Der Strom i_{G} (Fig. 6a) wird dadurch ab t₅ zu Null, und im Zeitraum von t₅ bis zu einem Zeitpunkt t₁₅ entlädt sich deshalb der Kondensator 60 praktisch vollständig, und zwar zunächst - in der Zeitspanne t_{D} - über die Diode 58, und anschließend - im Zeitraum t_{R1} - über die Serienschaltung der Widerstände 26 und 57.

Es sei nun angenommen, daß zu einem Zeitpunkt t₁₆ derjenige Kondensator 90 oder 91, der sich aufgeladen hat, defekt wird, so daß im betreffenden Strang 21 oder 22 ein hoher Strom 92 (Fig. 6a) fließt. Dieser bewirkt eine Aufladung des Kondensators 60, und zum Zeitpunkt t₁₇ schaltet die Spannung am Kondensator 60 den Transistor 64 ein, wodurch beide Transistoren 30 und 31 gleichzeitig leitend werden und ein sehr hoher Strom 94 (Fig. 6a) durch die beiden Stränge 21 und 22 fließt. Dieser bringt den Widerstand 26 zum Schmelzen und macht dadurch zum Zeitpunkt t₁₈ den Motor 10, z.B. innerhalb von 12 Sekunden ab dem Zeitpunkt t₁₆, stromlos (Schutz der zweiten Ebene).

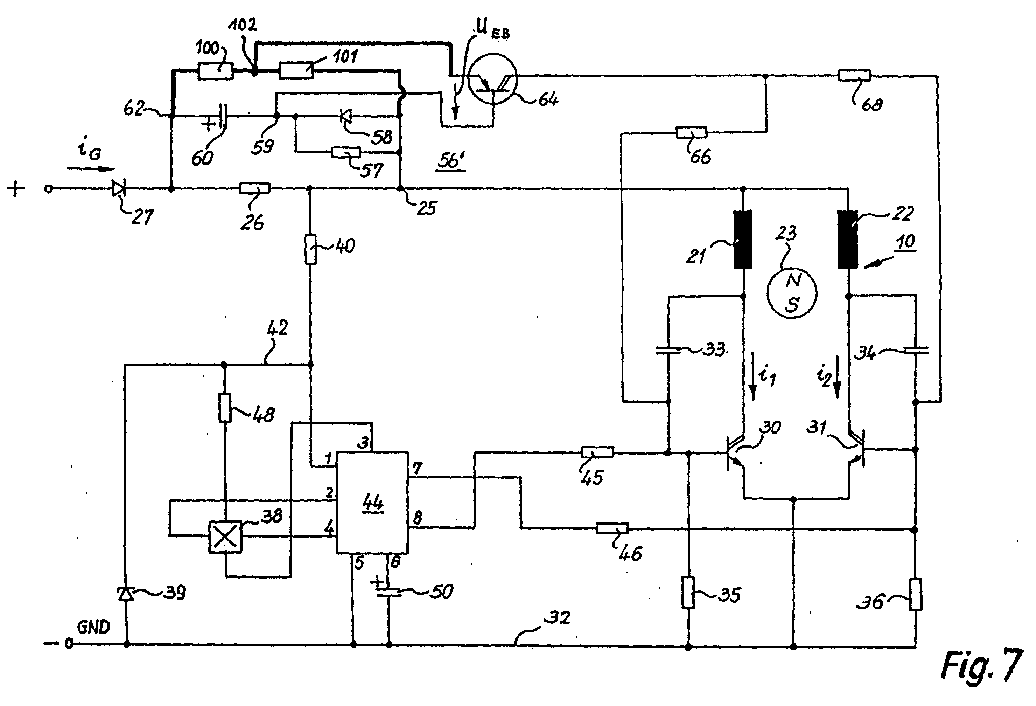

Fig. 7 zeigt eine Variante zu Fig. 2. Diese kann - bis auf eine wichtige Modifikation, die nachfolgend im einzelnen erläutert wird - gleich aufgebaut sein wie Fig. 2, weshalb für gleiche oder gleichwirkende Teile dieselben Bezugszeichen verwendet werden. Diese Teile werden gewöhnlich nicht nochmals beschrieben. Fig. 7 ist in derselben Weise dargestellt wie Fig. 2. Die Unterschiede zu Fig. 2 sind durch dickere Linien hervorgehoben.

Das Problem bei Fig. 2 ist folgendes: Im Betrieb verhindert die Diode 58, daß sich der Kondensator 60 des Schaltungsteils 56 vollständig entlädt, d.h. an der Diode 59 verbleibt bei jeder Entladung des Kondensators 60 eine kleine Restspannung, und diese Restspannung ist temperaturabhängig und kann im Extremfall dazu führen, daß, bei hohen Betriebstemperaturen, die Basis-Emitter-Schwellenspannung des Transistors 64 gefährlich nahe an den Wert der Restspannung an der Diode 58 herankommt. Dies könnte dazu führen, daß bei hohen Temperaturen der Transistor 64 ungewollt leitend wird und ein Leitendwerden beider Leistungstransistoren 30 und 31 und damit ein Ansprechen der Schutzschaltung 56 bewirkt.

In Fig. 7 wird dies dadurch verhindert, daß in der Schutzschaltung, die dort mit 56' bezeichnet ist, zwischen dem Punkt 62 und dem Punkt 25 ein Spannungsteiler aus zwei Widerständen 100, 101 angeordnet wird, deren Verbindungspunkt 102 mit dem Emitter des Transistors 64 verbunden wird.

Diese Widerstände können folgende Werte haben:

| | |
|---|---|
| R100 | 1 kOhm |
| R101 | 3,3 kOhm |

Die übrigen Werte können mit Fig. 2 übereinstimmen.

Durch den Spannungsteiler mit den Widerständen 100, 101 erhält im Vergleich zu Fig. 2 der Emitter des pnp-Transistors 64 (z.B. ROHM BA640xF) ein etwas negativeres Potential, erhält also eine leicht negative Vorspannung gegenüber der Basis des Transistors 64, welche mit dem Punkt 59 verbunden ist. Dies kompensiert die Restspannung an der Diode 58, so daß die Schutzschaltung 56' auch bei hohen Betriebstemperaturen nicht ungewollt ansprechen kann.

Im übrigen ist die Arbeitsweise dieselbe, wie sie bei Fig. 2 bereits ausführlich beschrieben wurde, d.h. wenn der IC 44 defekt wird und den Strom durch den Motor 10 nicht mehr abschalten kann, bewirkt der hohe Strom durch den Widerstand 26 eine länger andauernde Aufladung des Kondensators 60, wodurch schließlich der Transistor 64 leitend wird und bewirkt, daß beide Leistungstransistoren 30 und 31 des Motors 10 leitend werden. Dadurch erhält der Strom i_{G} eine hohe Amplitude, die z.B. innerhalb von 10 Sekunden den Schutzwiderstand 26 zum Durchschmelzen bringt und dadurch den Motor 10 stromlos macht. Dies entspricht dem Schutz der zweiten Ebene 18 in Fig. 1.

Ein solches Ansprechen des Transistors 64 im Normalbetrieb oder bei blockiertem Rotor 23, aber intaktem IC 44, wird durch den Spannungsteiler 100, 101 sicher ausgeschlossen, da zwischen Emitter und Basis des Transistors 64 hier nicht die volle Spannung des Kondensators 60 liegt, sondern diese Kondensatorspannung abzüglich einem Wert, der durch das Spannungsteilerverhältnis der Widerstände 100 und 101 bestimmt wird.

Dieses Spannungsteilerverhältnis sollte so bemessen sein, daß sich einerseits beim normalen Motorbetrieb bei jedem Kommutierungsvorgang und dem dabei erfolgenden Strom-Nulldurchgang, am Transistor 64 eine Basis-Emitter-Spannung von nahezu 0 V einstellt, und andererseits bei blockiertem Rotor 23 und Ausfall des IC 44 die Spannung am Widerstand 26 hoch genug wird, so daß auch über den Spannungsteiler aus den Widerständen 100, 101 am Emitter des Transistors 64 gegenüber der Basis dieses Transistors eine zum Ansprechen dieses Transistors ausreichende Spannung entsteht. Versuche haben gezeigt, daß die Schaltung gemäß,Fig. 7 bei hohen Betriebstemperaturen Eigenschaften hat, die gegenüber der Schaltung von Fig. 2 verbessert sind.

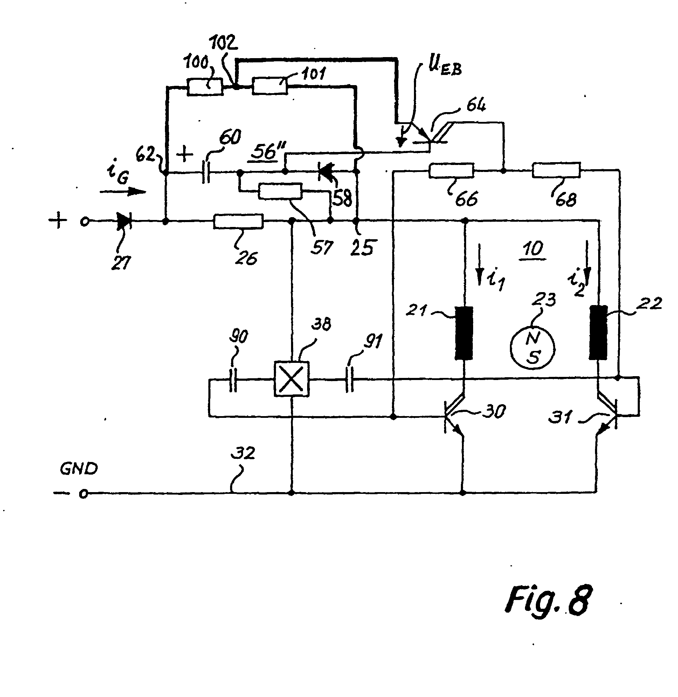

Fig. 8 zeigt eine Variante zu Fig. 5. Diese beruht auf denselben Überlegungen wie die Variante nach Fig. 7 und dient ebenfalls dazu, den Betrieb des Motors bei hohen Betriebstemperaturen sicher zu beherrschen, also ein ungewolltes Ansprechen des Schutzes der zweiten Ebene zu vermeiden.

Fig. 8 ist in der gleichen Weise dargestellt wie Fig. 5, und es werden dieselben Bezugszeichen verwendet wie dort. Die Unterschiede gegenüber Fig. 5 sind durch dickere Linien hervorgehoben. Für die Modifikation der Fig. 8 werden außerdem dieselben Bezugszeichen verwendet wie in Fig. 7.

Auch bei Fig. 8 ist in der Schutzschaltung 56" zwischen die Punkte 62 und 25 ein Spannungsteiler aus zwei Widerständen 100, 101 geschaltet, deren Verbindungspunkt 102 mit dem Emitter des Transistors 64 verbunden ist. Der Zweck ist derselbe wie bei Fig. 7 für die Widerstände 100 und 101 ausführlich beschrieben, und es wird deshalb auf die dortige Beschreibung verwiesen. Auch bei Fig. 8 wird erreicht, daß der Betrieb bei hohen Temperaturen sicherer wird, denn durch den Spannungsteiler 100, 101 wird die Restspannung an der Diode 58 kompensiert, die dort bei jeder Entladung des Kondensators 60 verbleibt.

Die Arbeitsweise ist dieselbe, wie sie bei Fig. 5 ausführlich beschrieben wurde, d.h. wenn einer der Kondensatoren 90 oder 91 defekt wird, bewirkt der daraus resultierende hohe Motorstrom eine Aufladung des Kondensators 60, durch die schließlich der Transistor 64 eingeschaltet wird, wodurch beide Leistungstransistoren 30 und 31 gleichzeitig leitend werden. Der dabei entstehende hohe Motorstrom bringt den Widerstand 26 zum Schmelzen und macht dadurch innerhalb weniger Sekunden den Motor 10 stromlos (Schutz der zweiten Ebene).

Naturgemäß sind im Rahmen der Erfindung vielfache weitere Abwandlungen und Modifikationen möglich.

## Patentansprüche

1. Elektronisch kommutierter Motor (10) mit mindestens zwei Strängen (21, 22), welche über zugeordnete Halbleiterschalter (30, 31) bestrombar sind, mit einem in der Stromzufuhr zum Motor angeordneten Sicherungswiderstand (26), welcher bei thermischer Überlastung eine Unterbrechung der Stromzufuhr zum Motor (1) bewirkt, **dadurch gekennzeichnet,**
**daß** mit einer Schaltvorrichtung (56), welche bei einem während einer vorgegebenen Zeitspanne andauernden hohen Strom (Fig. 6 : 92) durch diesen Sicherungswiderstand (26) eine gleichzeitige ständige Einschaltung des Stroms durch mehr als einen Strang des Motors und dadurch ein rasches Ansprechen des Sicherungswiderstandes (26) bewirkt.

2. Motor nach Anspruch 1, bei welchem die Schaltvorrichtung (56) durch eine Spannung an einem Kondensator (60) steuerbar ist, welcher über einen Ladewiderstand (57) von einem Spannungsabfall aufladbar ist, der an einem vom Betriebsstrom (i_{G}) des Motors durchflossenen Widerstand des Motors, insbesondere dem Sicherungswiderstand (26), im Betrieb entsteht,
und welchem Kondensator (60) ein niederohmiger Entladekreis (58) zugeordnet ist, der während von im Normalbetrieb periodisch auftretenden Zeitspannen mit niedrigem Betriebsstrom (i_{G}) wirksam ist.

3. Motor nach Anspruch 2, bei welchem die Zeitkonstante von Kondensator (60) und Ladewiderstand (57) in der Größenordnung von Sekunden liegt.

4. Motor nach Anspruch 2 oder 3, bei welchem parallel zum Ladewiderstand (57) eine Diode (58) angeordnet ist, welche Teil des niederohmigen Entladekreises ist.

5. Motor nach einem oder mehreren der Ansprüche 2 bis 4, bei welchem die Spannung am Kondensator (60) dem Steuereingang eines Transistors (64) zuführbar ist, welcher mit den Halbleiterschaltern (30, 31) einer Mehrzahl von Strängen (21, 22) des Motors (10) verbunden ist, um diese leitend zu machen, wenn dieser Transistor (64) leitend wird.

6. Motor nach einem oder mehreren der vorhergehenden Ansprüche, bei welchem der Sicherungswiderstand (26) mit einer Diode (27) in Reihe geschaltet ist, welche ebenfalls vom Betriebsstrom (i_{G}) des Motors durchflossen wird.

7. Motor nach einem oder mehreren der vorhergehenden Ansprüche, bei welchem eine Blockiersicherungsschaltung vorgesehen ist, welche bei blockiertem Rotor (23) den Motor zeitweilig oder ständig stromlos macht,
und bei welchem die Schaltvorrichtung (56) so ausgelegt ist, daß sie nicht anspricht, solange diese Blockiersicherungsschaltung normal arbeitet.

8. Motor nach einem oder mehreren der vorhergehenden Ansprüche, welcher als zweisträngiger, zweipulsiger Motor (23) ausgebildet ist, wobei die Schaltvorrichtung (56) so ausgebildet ist, daß sie bei ihrem Ansprechen das gleichzeitige Fließen eines Stromes in beiden Strängen (21, 22) bewirkt.

9. Motor nach Anspruch 5, bei welchem der Spannung am Kondensator (60), welche dem Steuereingang des Transistors (64) zuführbar ist, eine Hilfsspannung überlagert ist, welche von der Höhe des Gesamtstroms (i_{G}) des Motors (10) abhängig ist.

## Claims

1. Electronically commutated motor (10) with at least two phase windings (21, 22) which can be supplied with current through associated semi-conductor switches (30, 31), with a fuse resistor (26) which is arranged in the current supply to the motor and causes the current supply to the motor (10) to be interrupted in the event of thermal overloading, **characterised by** a switching device (56) which in the event of a high current (fig. 6: 92) for a predetermined period of time through this fuse resistor (26) causes the current to be switched on continuously through more than one phase winding of the motor simultaneously and thereby provokes a rapid response from the fuse resistor (26).

2. Motor according to claim 1, wherein the switching device (56) can be controlled by a voltage at a capacitor (60) which can be charged up through a charging resistor (57) by a voltage drop which occurs when in operation at a motor resistor, in particular the fuse resistor (26), carrying the operating current (i_{G}) of the motor, and which capacitor (60) has an associated low resistance discharge circuit (58) which is active during periods of time with low operating current (i_{G}) occurring periodically in normal operation.

3. Motor according to claim 2, wherein the time constant of the capacitor (60) and the charging resistor (57) is of the order of magnitude of seconds.

4. Motor according to claim 2 or 3, wherein a diode (58), which is part of the low resistance discharge circuit, is arranged parallel with the charging resistor (57).

5. Motor according to one or more of claims 2 to 4, wherein the voltage at the capacitor (60) can be fed to the control input of a transistor (64) which is connected to the semi-conductor switches (30, 31) of a plurality of phase windings (21, 22) of the motor (10) in order to switch these on when this transistor (64) is switched on.

6. Motor according to one or more of the preceding claims, wherein the fuse resistor (26) is connected in series with a diode (27) which also carries the operating current (i_{G}) of the motor.

7. Motor according to one or more of the preceding claims, wherein an immobilisation protection circuit is provided which temporarily or continuously cuts the current to the motor in the event of immobilisation of the rotor (23), and wherein the switching device (56) is designed so that it does not respond as long as this immobilisation protection circuit is working normally.

8. Motor according to one or more of the preceding claims, which is designed as a motor (23) having two phase windings and operating with two pulses, the switching device (56) being designed so that when it responds it produces a simultaneous flow of current in both phase windings (21, 22).

9. Motor according to claim 5, wherein the voltage at the capacitor (60) which can be fed to the control input of the transistor (64) is overlaid by an auxiliary voltage which depends on the level of the total current (i_{G}) of the motor (10).

## Revendications

1. Moteur à commutation électronique (10) comportant au moins deux enroulements (21, 22) alimentés par l'intermédiaire de commutateurs à semi-conducteurs (30, 31), avec une résistance de protection (26) disposée dans l'amenée du courant au moteur, laquelle provoque une interruption de l'amenée du courant au moteur (10) en cas de surcharge thermique, **caractérisé par le fait**
**qu'**un dispositif de commutation (56) provoque, en cas de passage d'un courant élevé pendant un laps de temps donné (fig. 6 : 92) à travers cette résistance de protection (26), une commutation simultanée permanente du courant à travers plus d'un enroulement du moteur et par conséquent une réponse rapide de la résistance de protection (26).

2. Moteur selon la revendication 1 dans lequel le dispositif de commutation (56) peut être commandé par une tension aux bornes d'un condensateur (60), lequel peut être chargé par l'intermédiaire d'une résistance de charge (57) par une chute de tension qui apparaît en fonctionnement aux bornes d'une résistance du moteur parcourue par le courant de fonctionnement (i_{G}) du moteur, en particulier de la résistance de protection (26), et auquel condensateur (60) est associé un circuit de décharge (58) à faible impédance ohmique qui est actif pendant les périodes de faible courant de fonctionnement (i_{G}) survenant périodiquement en fonctionnement normal.

3. Moteur selon la revendication 2 dans lequel la constante de temps du condensateur (60) et de la résistance de charge (57) est de l'ordre de secondes.

4. Moteur selon la revendication 2 ou 3 dans lequel une diode (58) est disposée en parallèle avec la résistance de charge (57), laquelle diode fait partie du circuit de décharge à faible impédance ohmique.

5. Moteur selon une ou plusieurs des revendications 2 à 4 dans lequel la tension aux bornes du condensateur (60) peut être amenée à l'entrée de commande d'un transistor (64), lequel est relié aux commutateurs à semi-conducteurs (30, 31) d'une pluralité d'enroulements (21, 22) du moteur (10) pour les rendre conducteurs lorsque ce transistor (64) est conducteur.

6. Moteur selon une ou plusieurs des revendications précédentes dans lequel la résistance de protection (26) est branchée en série avec une diode (27) qui est également parcourue par le courant de fonctionnement (i_{G}) du moteur.

7. Moteur selon une ou plusieurs des revendications précédentes dans lequel il est prévu un circuit de sécurité antiblocage qui interrompt temporairement ou continuellement le courant dans le moteur en cas de blocage du rotor (23),
et dans lequel le dispositif de commutation (56) est conçu de manière à ne pas se déclencher tant que ce circuit de sécurité antiblocage fonctionne normalement.

8. Moteur selon une ou plusieurs des revendications précédentes, lequel est conçu comme un moteur à deux enroulements, deux phases (23), le dispositif de commutation (56) étant conçu de manière à provoquer la circulation simultanée d'un courant dans les deux enroulements (21, 22) lors de son déclenchement.

9. Moteur selon la revendication 5 dans lequel une tension auxiliaire qui dépend de la valeur du courant total (i_{G}) du moteur (10) est superposée à la tension aux bornes du condensateur (60) qui peut être amenée à l'entrée de commande du transistor (64).
